# EUROPÄISCHE PATENTSCHRIFT

(11) **EP 0 524 436 B1**
(45) Veröffentlichungstag und Bekanntmachung des Hinweises auf die Patenterteilung: **24.08.1994**
(21) Anmeldenummer: 92110426.1
(22) Anmeldetag: 19.06.1992
(51) Int. Cl.: C01F 7/02, C04B 35/10, C09K 3/14

(54) **Verfahren zur Herstellung von gesintertem Material auf Basis von alpha-Aluminiumoxid, insbesondere für Schleifmittel**
Process for the preparation of alpha aluminiumoxide based sintered material specially useful for an abrasive agent
Procédé de préparation de materiau fritté à base d'oxyde d'aluminium alpha, en particulier pour être un agent abrasif

(30) Priorität: 21.06.1991 CH 1844/91
(43) Veröffentlichungstag der Anmeldung: 27.01.1993
(73) Patentinhaber: H.C. Starck GmbH & Co. KG, 38642 Goslar (DE)
(72) Erfinder: van Dijen, Franciscus, Dr.-Ing., 7891 Dettighofen (DE)
(74) Vertreter: Steiling, Lothar, Dr.

(56) Entgegenhaltungen:
- EP-A- 0 248 788
- EP-A- 0 263 810
- DE-A- 2 816 194
- GB-A- 2 099 012
- GB-A- 2 108 949

## Beschreibung

Die vorliegende Erfindung betrifft ein Verfahren zur Herstellung von gesintertem Material, insbesondere Schleifkorn, auf Aluminiumoxidbasis aus Aluminiumhydroxid (Gibbsit bzw. Hydrargillit) oder bei niedriger Temperatur calciniertem Aluminiumoxid.

α-Aluminiumoxid (Korund) wird wegen seiner grossen Härte seit vielen Jahrzehnten als Schleifmittel verwendet. Das klassische Verfahren zur Herstellung von für Schleifzwecke geeignetem Korund besteht im Schmelzen von Aluminiumoxid (Tonerde) oder aluminiumoxidhaltigen Rohstoffen (Bauxit) im Lichtbogenofen und dem Zerkleinern und Sieben der erstarrten Schmelze auf die gewünschte Schleifkorngrösse. Sowohl das Schmelzen als auch das Zerkleinern sind wegen des hohen Schmelzpunkts bzw. der grossen Härte sehr energieaufwendig und erfordern Anlagen, die teuer in der Beschaffung und Unterhaltung sind.
Ausserdem sind die Eigenschaften der so erhaltenen Schleifkörner, insbesondere ihre Zähigkeit, für viele Anwendungen nicht optimal.
Es wurden daher schon früh Anstrengungen unternommen, Korundschleifkorn durch Erhitzen aluminiumhaltiger Verbindungen unterhalb des Schmelzpunkts von Korund (ca. 2050°C) zu erhalten. Dabei stellte sich jedoch heraus, dass es nicht nur darauf ankommt, das Material dicht und porenfrei zu sintern, sondern dass vor allem die Mikrostruktur des gesinterten Materials eine entscheidende Rolle spielt. Insbesondere ist es wichtig, dass ein gleichmässig feines Gefüge mit Kristallitgrössen ≦1 µm ohne Einschluss einzelner grober Kristalle entsteht.
Die bekannten Lösungen erreichen dies durch das sogenannte Sol-Gel-Verfahren unter Verwendung hochreinen Böhmits (Aluminiumoxid-Monohydrat, AlOOH) als Ausgangsmaterial (EP 24 099) und gegebenenfalls Zusatz von Kristallisationskeimen ("seeds"), die die Bildung grosser Kristallite verhindern, indem sie eine rasche vollständige Kristallisation in der gewünschten Modifikation ermöglichen, so dass den einzelnen Kristalliten bei niedriger Temperatur weder Zeit noch Raum für ein übermässiges Wachstum bleibt (EP-Anm. 152 768). Die so erhaltenen Produkte sind zwar qualitativ sehr hochwertig, aber relativ teuer, weil das Ausgangsmaterial durch Hydrolyse von Aluminiumalkoholaten hergestellt wird, welche ihrerseits bereits ziemlich teuer sind.
Der erforderliche niedrige Gehalt an Alkalimetallen, insbesondere Natrium, lässt sich jedoch auf anderem Weg kaum erreichen. Ein niedriger Natriumgehalt ist insbesondere wichtig, um die Bildung von β-Aluminiumoxid beim Erhitzen zu vermeiden. Dieses wirkt sich besonders nachteilig auf die Schleifeigenschaften aus, weil es in Form grober Kristalle entsteht. Es wurde auch versucht, von weniger hochwertigem Böhmit ausgehend Schleifmittel vergleichbarer Qualität zu erhalten, dies gelang jedoch nur durch Zusatz erheblicher Mengen (Atomverhältnis zum Aluminium 1:35 bis 1:2) von Sinterhilfsmitteln und Einhalten einer bestimmten Erhitzungsgeschwindigkeit (DE-PS 32 19 607). Durch diese Zusätze bilden sich jedoch zusätzliche Phasen, beispielsweise die in der bereits erwähnten EP-PS 24 099 beschriebenen Spinelle, die an sich unerwünscht sind, weil sie das Schleifkorn "weicher" machen.

In EP-A-0 263 810 wird ein gesintertes, mikrokristallines Schleifmaterial offenbart, das aus mindestens 99,5 Gew.-% α-Al₂O₃ besteht, eine Dichte von 99% der theoretischen Dichte aufweist und dessen α-Al₂O₃ Kristallitgröße <1 µm ist. Allerdings muß auch in EP-A-0 263 810 von hochdispersem α-Aluminiumoxidhydrat (Pseudoböhmit) ausgegangen werden.

Aufgabe der vorliegenden Erfindung war es, ein Verfahren zur Herstellung gesinterter Aluminiumoxid-Schleifmittel bereitzustellen, das von preiswerten Rohstoffen ausgeht und ohne besondere Zusätze auf einfachem Weg ein Produkt mit hoher Schleifleistung liefert.
Erfindungsgemäss wird diese Aufgabe durch das Verfahren nach Patentanspruch 1 gelöst.

Es wurde überraschend gefunden, dass es durch eine geeignete Kombination von Verfahrensschritten möglich ist, aus gewöhnlichem technischem Aluminiumhydroxid (Al(OH)₃, Gibbsit, auch als Hydrargillit bezeichnet), wie es bei dem Bayer-Verfahren anfällt, gesintertes α-Aluminiumoxid hoher Dichte und Härte mit einer Kristallitgrösse von weniger als 1 µm, beispielsweise sogar weniger als 0,5 µm, herzustellen.

Die Herstellung von α-Aluminiumoxid aus technischem Aluminiumhydroxid ist zwar allgemein bekannt (sie bildet einen Schritt in der grosstechnischen Aluminiumherstellung), das üblicherweise so erhaltene Aluminiumoxid hat jedoch Eigenschaften, die es für normale Schleifzwecke völlig ungeeignet machen, nämlich eine hohe Porosität und schlechte Sintereigenschaften. Ein Sintern tritt erst bei so hohen Temperaturen ein, dass es mit einem starken Kristallwachstum verbunden ist und schliesslich ein zwar dichtes, aber wegen des groben Gefüges mechanisch unbefriedigendes Produkt liefert, das gegenüber herkömmlichem Korund keine wesentlichen Vorteile bietet.
Auf ähnliche Weise wird beispielsweise die sogenannte Tabulartonerde hergestellt, die sich durch grosse (einige hundert µm) tafelförmige Kristalle auszeichnet.
Lediglich für bestimmte Arten der Oberflächenbearbeitung, wie beispielsweise das Polieren, bei denen es weniger auf die Materialabtragung ankommt, sind solche Aluminiumoxide geeignet (DD-PS 76 485).
Für das oben erwähnte Sol-Gel-Verfahren eignet sich das gewöhnliche Aluminiumhydroxid nicht, weil es sich schlecht dispergieren und nicht gelieren lässt (Zu den Eigenschaften der Aluminiumhydroxide s. z.B. Ullmann's Encyclopdia of Industrial Chemistry, Volume A1, S.557-594, VCH Verlagsgesellschaft mbH, Weinheim (1985).)

Erfindungsgemäss wird das Ausgangsmaterial zunächst nass gemahlen bzw. desagglomeriert, um die herstellungsbedingt vorliegenden Agglomerate in die einzelnen Kristallite zu zerteilen.
Die Desagglomeration wird vorzugsweise in einem Attritor, einer Vibrationsmühle oder einer Rührwerkskugelmühle durchgeführt, wobei als Mahlkörper vorzugsweise solche Verwendung finden, die ganz oder überwiegend aus Aluminiumoxid bestehen. Die Flüssigkeitsmenge wird vorzugsweise so gewählt, dass eine Suspension mit einem Feststoffgehalt von 10 bis 40 Gew.% resultiert.
Als Flüssigkeit wird vorzugsweise Wasser verwendet, es ist jedoch auch möglich, das Wasser teilweise durch mit Wasser mischbare und leicht verdampfbare Lösungsmittel, wie beispielsweise niedere Alkohole oder Aceton, zu ersetzen.

Die so erhaltene Suspension wird vorteilhaft durch Säurezusatz auf einen pH von weniger als 5 eingestellt, wodurch gelöstes bzw. adsorbiertes Kohlendioxid ausgetrieben wird. Vorzugsweise wird ein pH von ca. 2 - 4 eingestellt.

Als Säure wird zweckmässig eine Säure aus der Gruppe Salpetersäure, Salzsäure, Zitronensäure, Ameisensäure, Essigsäure oder Oxalsäure verwendet, vorzugsweise wird Salzsäure eingesetzt. Die erforderliche Säuremenge hängt hierbei von den Eigenschaften des Aluminiumhydroxids ab, vor allem von dessen spezifischer Oberfläche.
Es ist auch möglich, auf einen Säurezusatz ganz oder teilweise zu verzichten und dafür eine Vakuumbehandlung der Suspension zur Entgasung einzusetzen.

Der Aluminiumhydroxidsuspension werden zweckmässig Kristallisationskeime zugesetzt, vorzugsweise solche aus α-Aluminiumoxid. Diese Keime können beispielsweise auf einfache Weise durch Mahlen von α-Aluminiumoxid, zum Beispiel in Form von calcinierter Tonerde, auf eine Partikelgrösse <1 µm erhalten werden.

Die Keime werden vorzugsweise in einer Menge von 1 bis 5 Gew.%, bezogen auf die Gesamtmenge (gerechnet als Al₂O₃) zugegeben und gründlich untergemischt. Besonders bevorzugt ist eine Zugabe am Anfang oder während der Desagglomeration. Ausser den Kristallisationskeimen können gegebenenfalls noch Hilfs- oder Zusatzstoffe, wie beispielsweise Entschäumer, Sinterhilfsmittel, Kornwachstumshemmer etc., zugesetzt werden. Für das erfindungsgemässe Verfahren sind solche Zusatzstoffe jedoch nicht erforderlich.

Die so erhaltene Suspension wird anschliessend getrocknet. Die Trocknung wird zweckmässig bei einer Temperatur unterhalb des Siedepunkts durchgeführt, um die Bildung von Dampfblasen zu verhindern. Bei Normaldruck ist beispielsweise eine Trocknungstemperatur von ca. 70°C vorteilhaft. Wenn die Suspension beispielsweise in einer Schichtdicke von ca. 10 cm vorliegt, kann die Trocknung bei dieser Temperatur in ca. 2 bis 3 Tagen durchgeführt werden. Bei Anwendung von höheren Drücken kann die Trocknungstemperatur entsprechend der Siedepunkterhöhung gesteigert und die Trocknungszeit verkürzt werden.
Bei der Trocknung verringert sich das Volumen bzw. die Schichtdicke entsprechend dem abnehmenden Flüssigkeitsgehalt, ohne dass eine nennenswerte Porosität entsteht. Es ist ohne weiteres möglich, eine offene Porosität von ≦0,05 ml/g und durchschnittliche Porendurchmesser ≦10 nm (bestimmt nach der Quecksilber-Eindringmethode) zu erreichen.

Der so erhaltene trockene Kuchen wird anschliessend, gegebenenfalls nach Zerkleinerung auf die der gewünschten Schleifkörnung entsprechende Korngrösse (unter Berücksichtigung des Schwindens beim Sintern), gesintert.
Die Sintertemperatur liegt zweckmässig bei 1100 bis 1500°C. Die Sinterdauer ist abhängig von der Temperatur und beträgt beispielsweise bei 1400°C ca. 2 h.

Trotz der starken Volumenkontraktion durch die Umwandlung des Aluminiumhydroxids in α-Aluminiumoxid (ca. 30% linear) wird bei der erfindungsgemässen Durchführung ein dichtes Sinterprodukt erhalten, ohne dass ein gesonderter Calcinierungsschritt erforderlich wäre.

Anstelle des Aluminiumhydroxids können für das erfindungsgemässe Verfahren auch bei tiefer Temperatur calcinierte Aluminiumoxide oder Gemische aus letzteren und Aluminiumhydroxid eingesetzt werden.
Die bei tiefer Temperatur calcinierten Aluminiumoxide enthalten noch etwas Wasser, beispielsweise ca. 8 Gew.%, und wandeln sich bei der erfindungsgemässen Behandlung durch Wasseraufnahme wieder in Aluminiumhydroxid um, wie durch thermogravimetrische Untersuchung der getrockneten Suspension gezeigt werden kann. Da die bei niedriger Temperatur calcinierten Aluminiumoxide ihrerseits aus Aluminiumhydroxid hergestellt werden und ihre Verwendung keine besonderen Vorteile bringt, ist Aluminiumhydroxid als Ausgangsmaterial für das erfindungsgemässe Verfahren zu bevorzugen.

Das erfindungsgemäss hergestellte Sintermaterial zeichnet sich durch sehr feine Kristallitgrösse, hohe Sinterdichte und grosse Härte aus. Seine Zähigkeit liegt im Bereich von 2,5 MPa·m^{½} oder besser. Es eignet sich nicht nur für Schleifmittel, sondern auch für andere Verwendungen, bei denen es auf diese Eigenschaften ankommt.

Die nachfolgenden Beispiele verdeutlichen die Durchführung des erfindungsgemässen Verfahrens.

### Beispiel 1

In einem Attritor (0,6 l) wurden 100 g reines Aluminiumhydroxid (Martinal^{R} OL-104, Martinswerk GmbH, D-W-5010 Bergheim) in entsalztem Wasser unter Zusatz von 1,5 Gew.% (bezogen auf das Aluminiumhydroxid) α-Aluminiumoxidkeimen mit Aluminiumoxid-Mahlkugeln (d = 1 mm) 2 h gemahlen und desagglomeriert. Die Teilchen- bzw. Agglomeratgrösse war vor dem Mahlen zu 100% kleiner als 10 µm, nach dem Mahlen zu 100% kleiner als 1 µm. Die α-Aluminiumoxidkeime wurden durch Mahlen von hochtemperaturcalciniertem Aluminiumoxid im Attritor auf eine Teilchengrösse <0,5 µm gewonnen. Der pH wurde durch Zugabe von ca. 20 ml 37% Salzsäurelösung vor dem Mahlen auf 2 eingestellt. Die Suspension wurde in einer Schichtdicke von anfangs 5 cm bei 70°C 2 Tage getrocknet.
Der mittlere Porendurchmesser nach der Trocknung betrug 9,5 nm (Quecksilber-Porosimetrie), die offene Porosität war kleiner als 0,05 ml/g. Eine Untersuchung des getrockneten Materials mit Thermogravimetrie bzw. Differentialthermoanalyse zeigte, dass das gebundene Wasser unterhalb 350°C entweicht und bei 1010°C die Kristallisation zu α-Al₂O₃ einsetzt.
Nach 2 h Sintern bei 1400°C wurde ein Material mit einer Kristallitgrösse <0,5 µm, einer Dichte >3,8 g/ml (>95% th.D.) und einer Härte nach Vickers (500 g Last) >19 GPa erhalten.

### Beispiel 2

Es wurde verfahren wie in Beispiel 1 beschrieben, jedoch wurden anstelle des Aluminiumhydroxids 70 g eines bei niedriger Temperatur calcinierten Aluminiumoxids (Typ HLS, Martinswerk) eingesetzt (Glühverlust ca. 5 Gew.%, Na₂O ca. 0,2 Gew.%, andere Metalle 0,05 Gew.%, Teilchengrösse 99% <1 µm, spez. Oberfläche 200 m²/g).
Eine thermogravimetrische Untersuchung des getrockneten Materials ergab einen Gewichtsverlust von 35% bei 400°C, entsprechend der Zusammensetzung Al(OH)₃.
Nach 2 h Sintern bei 1400°C wurde ein Produkt mit den gleichen Eigenschaften wie in Beispiel 1 erhalten.

### Beispiel 3

Es wurde verfahren wie in Beispiel 2 beschrieben, jedoch mit dem bei niedriger Temperatur calcinierten Aluminiumoxid vom Typ AX (Martinswerk) (Glühverlust ca. 6 Gew.%, Na₂O ca. 0,2 Gew.%, andere Metalle 0,06 Gew.%, Korngrössenverteilung: ca. 25% <106 nm, ca. 10% <45 µm, spez. Oberfläche ca. 175 m²/g) als Ausgangsmaterial. Der Natriumgehalt betrug nach dem Sintern (1400°C, 1 h) 0,11 Gew.%. Durch Röntgenbeugungsanalyse konnte im gesinterten Material kein β-Al₂O₃ nachgewiesen werden (Nachweisgrenze ca. 1 Gew.%).

### Beispiel 4 (Vergleichsbeispiel)

Es wurde verfahren wie in Beispiel 2 beschrieben, jedoch wurde anstelle der Attritor-Behandlung lediglich 30 min mit einer Kolloidmühle (Ultra Turrax^{R}, Janke und Kunkel) gemischt. Der nach 3-tägigem Trocknen bei 70°C erhaltene Kuchen wies einen durchschnittlichen Porendurchmesser von 400 nm und eine offene Porosität von 0,06 ml/g auf. Durch Calcinieren bei 1200°C (5 h) wurde ein Material mit einer offenen Porosität von 0,11 ml/g erhalten.
Das Material gemäss Beispiel 2 wies dagegen nach 5 h bei 1200°C nur eine offene Porosität von 0,03 ml/g auf.

## Patentansprüche

1. Verfahren zur Herstellung gesinterter Materialien auf Basis von α-Aluminiumoxid durch Herstellen einer Suspension aus einem Vorläufer von α-Aluminiumoxid und gegebenenfalls üblichen Zusätzen, Trocknen der Suspension und Sintern, dadurch gekennzeichnet, dass als Vorläufer von α-Aluminiumoxid Aluminiumhydroxid (Al(OH)₃) oder ein bei niedriger Temperatur calciniertes Aluminiumoxid eingesetzt und zur Bildung der Suspension einer Mahl- und Desagglomerierbehandlung unterzogen und die Suspension a) durch Zusatz einer Säure auf einen pH von weniger als 5 eingestellt und/oder b) zur Entfernung gelöster und/oder adsorbierter Gase einer Vakuumbehandlung unterzogen wird.

2. Verfahren nach Patentanspruch 1, dadurch gekennzeichnet, dass die Mahl- und Desagglomerierbehandlung mit einem Attritor, einer Vibrationsmühle oder einer Rührwerkskugelmühle durchgeführt wird.

3. Verfahren nach Patentanspruch 2, dadurch gekennzeichnet, dass der Attritor, die Vibrationsmühle oder die Rührwerkskugelmühle mit überwiegend aus α-Aluminiumoxid bestehenden Mahlkörpern betrieben wird.

4. Verfahren nach einem oder mehreren der Patentansprüche 1 bis 3, dadurch gekennzeichnet, dass der Suspension Kristallisationskeime aus α-Aluminiumoxid zur Verhinderung des Kornwachstums beim Sintern zugesetzt werden.

5. Verfahren nach einem oder mehreren der Patentansprüche 1 bis 4, dadurch gekennzeichnet, dass als Säure eine Säure aus der Gruppe Salpetersäure, Salzsäure, Essigsäure, Zitronensäure, Ameisensäure oder Oxalsäure verwendet wird.

6. Verfahren nach einem oder mehreren der Patentansprüche 1 bis 5, dadurch gekennzeichnet, dass das Sintern bei einer Temperatur von 1100 bis 1500°C durchgeführt wird.

7. Verfahren nach einem oder mehreren der Patentansprüche 1 bis 6, dadurch gekennzeichnet, dass als Aluminiumhydroxid das bei der Tonerdeherstellung nach dem Bayer-Verfahren anfallende Aluminiumhydroxid eingesetzt wird.

## Claims

1. A process for the preparation of alpha-aluminiumoxide based sintered materials by preparing a suspension from a precursor of alpha-aluminiumoxide and, optionally, conventional additives, drying said suspension and sintering, characterized in that aluminium hydroxide (AL(OH)₃) or an aluminiumoxide calcined at low temperature is used as a precursor of alpha-aluminiumoxide and subjected to a grinding and deagglomeration treatment to form a suspension, whereupon said suspension is (a) adjusted to a pH of less than 5 by addition of an acid and/or (b) subjected to a vacuum treatment to remove dissolved and/or adsorbed gases.

2. The process according to Claim 1, characterized in that the grinding and deagglomeration treatment is conducted in an attritor, a vibrating mill or an agitator-ball mill.

3. The process according to Claim 2, characterized in that attritor, vibrating mill or agitator-ball mill are operated with milling elements consisting predominantly of alphaaluminiumoxide.

4. The process according to one or more of Claims 1 to 3, characterized in that crystallization seeds of alphaaluminiumoxide are added to the suspension to prevent grain growth on sintering.

5. The process according to one or more of Claims 1 to 4, characterized in that the acid is selected from the group consisting of nitric acid, hydrochloric acid, acetic acid, citric acid, formic acid and oxalic acid.

6. The process according to one or more of Claims 1 to 5, characterized in that sintering is conducted at a temperature of from 1100 to 1500°C.

7. The process according to one or more of Claims 1 to 6, characterized in that, as an aluminium hydroxide, there is used the aluminium hydroxide obtained in alumina preparation according to the Bayer process.

## Revendications

1. Procédé pour la préparation de matériau fritté à base d'oxyde d'α-aluminium par préparation d'une suspension à partir d'un précurseur d'oxyde d'α-aluminium et éventuellement des additifs habituels, séchage de la suspension et frittage, caractérisé en ce qu'en tant que précurseur de l'oxyde d'α-aluminium, on met en oeuvre de l'hydroxyde d'aluminium (Al(OH)₃) ou un oxyde d'aluminium calciné à basse température et pour la formation de la suspension, on soumet à un traitement de broyage et de désagglomération et la suspension a) est ajustée à un pH d'au moins 5 par addition d'un acide et/ou b) pour la suppression de gaz dissous et/ou adsorbé, on soumet à un traitement de vide.

2. Procédé selon la revendication 1, caractérisé en ce que le traitement de broyage et de désagglomération est effectué avec un broyeur par friction, un broyeur à vibrations ou un broyeur à boulets et agitateur.

3. Procédé selon la revendication 2, caractérisé en ce que le broyeur par friction, le broyeur par vibrations ou le broyeur par boulets et agitateur est de façon prédominante mis en action avec des corps de broyage constitués par de l'oxyde d'α-aluminium.

4. Procédé selon une ou plusieurs des revendications 1 à 3, caractérisé en ce qu'à la suspension on ajoute des germes de cristallisation à partir d'oxyde d'α-aluminium pour empêcher la croissance de grains lors du frittage.

5. Procédé selon une ou plusieurs des revendications 1 à 4, caractérisé en ce qu'en tant qu'acide, on utilise un acide du groupe acide nitrique, acide chlorhydrique, acide acétique, acide citrique, acide formique ou acide oxalique.

6. Procédé selon une ou plusieurs des revendications 1 à 5, caractérisé en ce que le frittage est conduit à une température de 1100 à 1500°C.

7. Procédé selon une ou plusieurs des revendications 1 à 6, caractérisé en ce qu'en tant qu'hydroxyde d'aluminium, on met en oeuvre l'hydroxyde d'aluminium obtenu lors de la fabrication d'alumine selon le procédé Bayer.
